(19) Europäisches Patentamt
European Patent Office
Office européen des brevets

(11) EP 0 648 635 B1

(12) EUROPEAN PATENT SPECIFICATION

(45) Date of publication and mention
of the grant of the patent:
29.07.1998 Bulletin 1998/31

(51) Int. Cl.⁶: **B60K 6/04**

(21) Application number: 93830414.4

(22) Date of filing: 14.10.1993

(54) **Hybrid propulsion system for vehicles, in particular for urban use**

Hybridantriebssystem für Fahrzeuge, insbesondere für den städtischen Gebrauch

Système d'entraînement hybride pour véhicules, notamment pour usage urbain

(84) Designated Contracting States:
DE ES FR GB IT SE

(43) Date of publication of application:
19.04.1995 Bulletin 1995/16

(73) Proprietors:
• Doveri, Nicolò
I-56025 Pontedera (Pisa) (IT)
• LOMBARDINI Fabbrica Italiana Motori S.p.A.
I-42100 Reggio Emilia (IT)

(72) Inventors:
• Doveri, Nicolò
I-56025 Pontedera, Pisa (IT)
• Vaccari, Sergio
I-42100 Reggio Emilia (IT)

(74) Representative:
Mannucci, Gianfranco, Dott.-Ing.
Ufficio Tecnico Ing. A. Mannucci
Via della Scala 4
50123 Firenze (IT)

(56) References cited:
EP-A- 0 552 140          DE-A- 2 502 400
DE-A- 2 510 623          FR-A- 2 679 839

• ATZ 87(1985)11, pages 581-584

## Description

The present invention relates to a new hybrid propulsion system for vehicles, namely a system comprising at least a heat engine and an electric motor, in accordance with the preamble of Claim 1.

The hybrid systems proposed hitherto can be divided in two main categories:

a) series hybrid vehicles, in which all the power necessary for traction is supplied by the electric motor, powered both by batteries, in turn charged by a generator actuated by the heat engine, and directly by the generator itself. The heat engine in this case is dimensioned so as to supply the mean power used, while the electric motor must be able to supply the power and the torque required in all the situations in which the vehicle is used. A speed-changing unit is generally required, since the entire operating range cannot be covered by the starting torque and maximum power characteristics of current electric motors.

The situation as regards the emissions of the heat engine is favourable with reference to a test cycle since the heat engine operates within a fixed speed range, and therefore without transients, and moreover supplies a limited power. The situation is less advantageous at a constant speed; in fact, the emissions as well as the consumption levels are penalized by the efficiency of the electric drive, which is less than that of a mechanical drive.

b) parallel hybrid vehicles, in which both the electric motor and the heat engine may be coupled alternately or simultaneously to the transmission of the vehicle. The electric motor is in this case smaller than that used in a series hybrid vehicle, but the heat engine must frequently adapt its operation to the speed variations of the vehicle, thus partly losing the advantage of a reduction in emissions, which is precisely that of the series hybrid solution. Furthermore a speed-changing unit is essential. Control of the speed-changing unit as well as activation and deactivation of the engine and motor and adjustment of their load is very complex.

A complete overview of the state of the art relating to hybrid propulsion systems is contained in A.F. Burke's "Hybrid/Electric Vehicle Design Options and Evaluations", SAE 920447.

From DE-A-25 10 623 a hybrid propulsion system is known with an internal combustion engine combined with an electric machine. The output of the two machines are combined via an epicyclic gearing. The electric machine works alternately as a generator or as a motor, depending on the operative conditions of the vehicle. The energy produced by the electric machine when it works as a generator is stored in a battery which then feeds energy to the same machine when the latter operates in the motor mode.

A similar system, i.e. with a single reversible electric machine, is known from Nikolaus Saridakis "Golf mit Otto-Elektro-Hybridantrieb, in ATZ Automobiltechnische Zeitscrift, 87, 1985, 11, pages 581-584.

A hybrid propulsion system with an internal combustion engine and two electric machines is known from EP-A-0 552 140. The two electric machines work both alternately in the motor or in the generator mode. A complex system of clutches and brakes is thus necessary to control the system according to the operative conditions of the vehicle.

The aim of the present invention is to provide a hybrid propulsion system which overcomes the drawbacks of conventional hybrid systems both of the series and parallel type.

More particularly, the present invention aims to provide a system which allows the engine and motor to be used in series or in parallel depending on the application conditions, without the system requiring a speed-changing unit.

These and other aims and advantages, which will become clear to those skilled in the art from reading the description which follows, are obtained by means of the combination of characteristic features according to Claim 1.

Further characteristic features and advantageous embodiments of the system according to the invention are indicated in the appended sub-claims.

With the system according to the present invention, the heat engine produces, as in the series hybrid engines, a power output less than the maximum power output required (in practice not much greater than the mean power used) for propulsion of the vehicle, and this power is partly used mechanically for propulsion, while the electric motor supplements the difference between the power supplied by the heat engine and the power which the vehicle requires for propulsion. The excess power produced by the heat engine is absorbed by an electric generator which recharges the batteries and/or directly powers the electric motor.

The invention is illustrated in detail below with reference to the accompanying drawing, in which a possible non-limiting embodiment of the present invention is shown. In the drawing:

Fig. 1 shows the basic diagram of an embodiment of the invention;
Fig. 2 is an axial section through a possible embodiment of the epicyclic gearing which connects the engine and motor to the drive wheels of the vehicle; and
Fig. 3 is an axial section through a further embodiment of the epicyclic gearing.

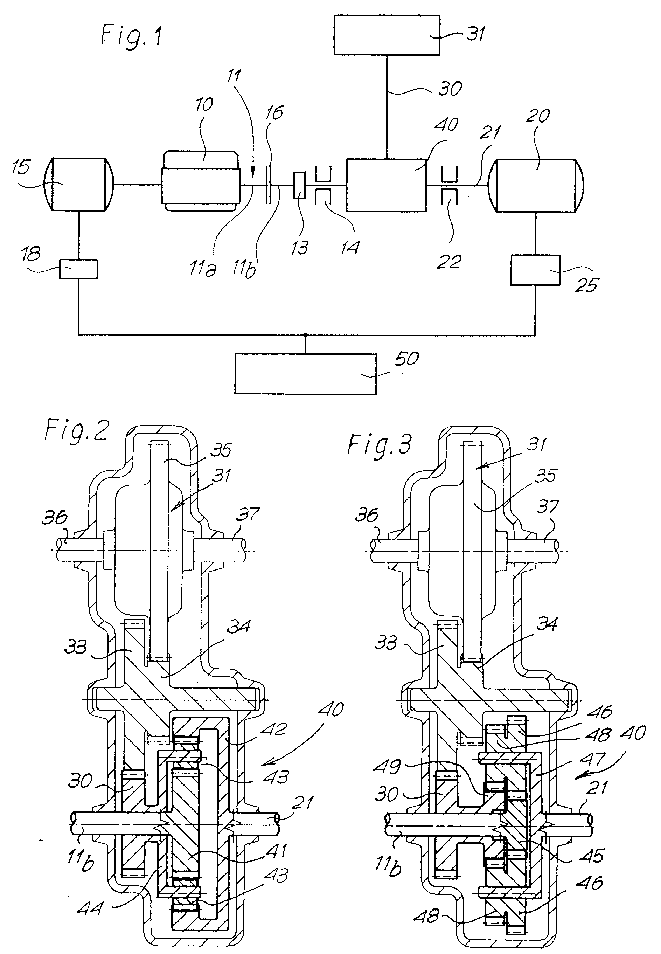

With reference initially to the diagram of Fig. 1, the propulsion system comprises a controlled- or spontaneous-ignition heat engine 10 equipped with its own mechanical or electronic speed regulator (not shown). A generator 15, rotating at the same number of revolutions as the heat engine 10, is directly connected to the heat engine 10. However, it is also possible for the electric generator 15 to be driven via a suitable transmission gearing.

A regulator 18, which has the function of controlling the power supplied, voltage, etc., is associated with the generator 15. A transmission shaft 11 connects the heat engine to a first input shaft of an epicyclic gearing, generally denoted by 40 and described in more detail below, which connects the engine to the transmission generally denoted by 31 via an output shaft 30 of the epicyclic gearing 40 itself.

The shaft 11 is divided into two portions 11a and 11b connected together by a clutch 16 which, whenever required, enables the heat engine 10 to be disengaged from the transmission. Downstream of the clutch 16 there is a free wheel 13 which allows the portion 11b of the shaft 11 to rotate only in the direction of rotation of the heat engine, and a brake 14, which prevents rotation of the portion 11b of the shaft 11 in either direction when the clutch 16 is disengaged. The free wheel 13 could also be dispensed with.

A second input shaft of the epicyclic gearing 40 has associated with it, via a shaft 21, an electric traction motor 20 of one of the known types (direct current, separate excitation, permanent magnet, synchronous with variable reluctance, etc.). The motor 20 is controlled by a main regulator 25 which, in addition to its own function as regulator of the motor, interacts with the regulator 18, with the speed regulator of the heat engine 10, with the pedal of the accelerator and with a speedometer which detects the speed of the vehicle.

The shaft 21 may have associated with it a brake 22 which allows said shaft to be locked when this is necessary in order to use only the heat engine in an emergency.

The system illustrated in Fig. 1 is completed by a set of batteries 50 which are charged by the generator 15 and which supply energy to the electric motor 20.

The epicyclic gearing 40 may be realized in various ways. It is important, however, that it should be an epicyclic gearing with two input shafts and an output shaft, with the output shaft being connected to the drive wheels, while the input shafts are respectively connected to the heat engine 10 and electric motor 20. Obviously, during free-running or downhill travel, the power input shaft is the transmission shaft and the two output shafts must be braked. Furthermore the internal ratio is chosen so that both the engine 10 and motor 20 contribute, with their characteristic torque, to the formation of the drive torque input to the transmission 31.

In other words, the gearing must allow the addition of power outputs of the same order of magnitude, but with different characteristics, since that of the heat engine is achieved at a high speed with a low torque, whereas that of the electric motor is also obtained at a low number of revolutions with a high torque.

Figs. 2 and 3 show two possible embodiments of the epicyclic gearing 40.

In the embodiment according to Fig. 2, a first gear wheel 41 of the gearing 40 is keyed onto the shaft 11b, which receives the movement from the heat engine 10. An internal crown gear 42 is keyed onto the shaft 21 actuated by the electric motor 20. A series of gear wheels 43 (two of which are visible in Fig. 2), mounted on a planet-wheel carrier or train carrier 44, mesh with the gear 41 and the crown gear 42. The train carrier 44 is integral with a gear wheel 30, which represents the output of the epicyclic gearing 40. Via a pair of gear wheels 33, 34, the movement is transmitted to the crown gear 35 integral with the housing of a differential 31, the output half-shafts 36, 37 of which transmit the movement to the drive wheels of the vehicle.

In this embodiment, therefore, the torques supplied by the engine 10 and motor 20 are introduced via the so-called sun gears of the gearing (i.e. the gear wheel 41 and crown gear 42), the sun gear with a smaller diameter being connected to the heat engine. This takes account of the fact that the heat engine operates at a greater angular velocity, supplying a low torque, while the electric motor, which is able to supply a high torque at a low number of revolutions, is connected to the gearing via the sun gear with a larger diameter.

In the embodiment according to Fig. 3, the portion 11b of the shaft 11 has keyed on it a gear wheel 45 which meshes with a series of gear wheels 46 mounted idly on a train carrier 47 integral with the shaft 21 of the electric motor 20. Each gear wheel 46, which rolls on the wheel 45, is integral with a respective gear wheel 48, which rolls on another gear wheel 49 coaxial with the gear wheel 45 and hence with the two shafts 11 and 21. The gear wheel 49 is integral with the gear wheel 30 which transmits the movement, via the wheels 33, 34, to the differential 31, in a similar manner to the embodiment according to Fig. 2.

In the embodiment according to Fig. 3, therefore, the torque supplied by the heat engine 10 is introduced into the gearing 40 in this case also via a sun gear of small diameter, while the torque of the electric motor 20 is introduced via the train carrier 47. The movement which is output is received by the second sun gear 49. However, the condition is satisfied, whereby the low torque of the heat engine (supplied at a high number of revolutions) is introduced via a wheel of small diameter rotating at high speed, while the high torque supplied at a low operating speed by the electric motor 20 is introduced via a component (train carrier) rotating at a low speed.

As known from mechanics, the speeds of rotation of the two input shafts and the output shaft are linked together by the relation, called the Willis formula, which in the embodiment according to Fig. 2, is:

$$K = \frac{N_{21} - N_{30}}{N_{11} - N_{30}} \qquad (1)$$

where

| | |
|---|---|
| K | is the internal transmission ratio of the gearing, which characterizes the gearing and depends on its geometry, |
| $N_{11}$ | is the speed of rotation of the shaft 11, |
| $N_{21}$ | is the speed of rotation of the shaft 21, |
| $N_{30}$ | is the speed of rotation of the shaft 30. |

Furthermore, the torques on the three shafts are linked together by the following relations:

$$C_{11} = \frac{K}{1-K} C_{30} \qquad (2)$$

$$C_{21} = \frac{1}{K-1} C_{30} \qquad (3)$$

where:

| | |
|---|---|
| $C_{11}$ | is the torque transmitted by the shaft 11, |
| $C_{21}$ | is the torque transmitted by the shaft 21, |
| $C_{30}$ | is the torque transmitted by the shaft 30. |

In the embodiment according to Fig. 3, the Willis formula can be written as follows:

$$y = \frac{N_{30} - N_{21}}{N_{11} - N_{21}} \qquad (4)$$

y being the internal transmission ratio of the gearing in this case.

It can be shown that the two embodiments of the gearing are equivalent and therefore the relations (2) and (3) between the torques are always valid, if:

$$y = \frac{K}{K-1} \qquad (5)$$

From the equations (1), (2) and (3) it emerges that the speed of rotation of the shaft 30, and hence (ultimately) the speed of the vehicle, may be varied by varying the speed of either of the drive shafts 21 and 11. Since the heat engine 10 operates within a fixed range (or within a limited number of predetermined speed ranges), variation in the speed of the vehicle is obtained, for each speed range of the heat engine 10, by varying the speed of rotation of the electric motor 21. Moreover, since the resistance torque on the drive wheels of the vehicle, and hence on the output shaft 30 of the gearing 40, is fixed, the distribution of the torques supplied by the engine 10 and motor 20 is determined by the ratio of the gearing. For this reason it is necessary to choose a ratio K which enables the low torque of the heat engine and the high torque of the electric motor to be exploited.

Since the torque supplied by the heat engine 10 is constant (within a fixed operating range), modulation of the torque $C_{11}$ supplied to the epicyclic gearing 40 of the heat engine 10 is obtained by varying the power consumption of the generator 15.

The electric motor 20, finally, must in turn supply a variable power output, depending on the torque $C_{11}$ (which is a function of the resistance torque $C_{30}$) and the number of revolutions $N_{21}$ (which is a function of the vehicle's speed of travel).

This having been stated, the following comments may be made regarding the operation of the hybrid propulsion system described above:

Operation in solely electric mode:

In this mode of operation the clutch 16 is disengaged and the brake 14 prevents rotation of the shaft 11b. The electric motor 20 ensures traction during forward travel and backward travel by reversing its own direction of rotation, as well as energy recovery during free-running or downhill travel. Reverse travel is possible only in electric mode, or in series hybrid mode if the heat engine 10 is in operation.

Operation in hybrid mode:

In hybrid mode the beginning of the cycle, upon start-up of the vehicle, is similar to electric mode, with the clutch 16 disengaged and the brake 14 applied. Upon operation of the accelerator the vehicle starts with the electric motor alone, and the heat engine (if not already running) is started up and runs at a speed close to idle speed, charging the batteries. This mode of operation corresponds to conventional series hybrid operation.

When the vehicle reaches a given speed, of the order of 15-25 km/h, the regulator 25 engages the clutch 16 and releases the brake 14. The shaft 11b thus starts to rotate and if, during the manoeuvre, the speed of the vehicle is assumed to be constant initially, the revolutions of the electric motor are proportionally reduced as the clutch 16 engages, since a part of the movement is now supplied to the gearing 40 by the heat engine 10. The system is now operating in parallel hybrid mode.

With further pressure on the accelerator pedal, the vehicle accelerates owing to the increase in the speed of the electric motor 20, the speed of the heat engine 10 having to remain constant.

Upon reaching a higher speed, the heat engine 10 is accelerated and passes from the preceding operating range to a new operating range with a higher speed of rotation. This may result both in a decrease in the speed of rotation of the electric motor 20 and an increase in the speed of the vehicle. This transition of the heat engine 10 to a higher speed range with a corresponding reduction in the speed of rotation of the electric motor may be repeated several times until higher vehicle speeds are reached in each case, the need for regulation of the heat engine with two or more speed stages depending, inter alia, on the characteristics of the vehicle and the performance required in terms of a reduction in the polluting emissions.

Let us assume now that the vehicle has to negotiate a slope of gradually increasing steepness: the regulation system will increase excitation of the electric motor 20 and reduce that of the generator 15 so as to transfer a larger percentage of the torque of the heat engine 10 to the epicyclic gearing 40.

If, with the generator 15 completely deenergized, the steepness of the slope should increase further (and therefore, in other words, the torque $C_{30}$ increase), the control system intervenes, reducing the number of revolutions of the electric motor 20, so as to slow down the vehicle and thus reduce the torque required. If the vehicle slows down beyond a certain speed value, the reverse sequence of operations with respect to that described for acceleration is performed, and the heat engine passes to a lower speed range where it supplies a larger torque. If this is not sufficient because the steepness is still increasing, the speed is further reduced until, at a certain steepness, operation in parallel hybrid mode is no longer possible. As a result the clutch 16 is disengaged, the brake 14 applied and the vehicle advances in series hybrid mode, with all the power supplied by the electric motor 20 and the power of the heat engine 10 being transferred to the generator 15 which supplies the electric motor 20 and/or charges the batteries 50.

All the operations described above are controlled, as mentioned, by the regulator 25 on the basis of the signals received from the components of the propulsion system (speed of rotation of the engine and motor and torque produced, speed of travel of the vehicle) as well as the commands received from the driver (acceleration and reversal of travel).

The main advantages of the hybrid propulsion system described above are as follows:

- greater efficiency, lower consumption and reduced emission levels compared to series hybrid propulsion systems, since part of the thermal power is transmitted directly to the wheels mechanically via the epicyclic gearing, without passing via the electrical components and batteries;
- lower emission levels compared to parallel hybrid systems since the heat engine runs at one or a very small number of fixed speed ranges (two or three), with scarcely any transients;
- electric motor which is smaller, lighter and more economical compared to the series hybrid since it has to supply only a part of the power required, the other part being directly supplied mechanically by the heat engine;
- elimination of the speed-changing unit, required in conventional series and parallel hybrid systems.

## Claims

1. A hybrid propulsion system for vehicles, including:

   - a heat engine (10);
   - a transmission means (31) for transmitting the power supplied by the system to the wheels of a vehicle;
   - an electric generator (15) permanently connected to said heat engine (10) and driven thereby, said electric generator (15) being connected to storage means (50) for storing electric energy produced by said electric generator;
   - an electric motor (20) electrically connected to said storage means (50);
   - an epicyclic gearing (40) with a first and a second input shaft (11b, 21) and an output shaft (30), said heat engine (10) and said electric motor (20) being connected to said first and said second input shaft (11b, 21) respectively; wherein the heat engine (10) is connected to said first input shaft (11b) of said epyciclic gearing (40) through a clutch (16) and a brake (14) arranged between the clutch and the epicyclic gearing (40), the disengagement of said clutch and the locking of said brake (14) causing said system to operate in the sole electric mode, in which the heat engine is out of operation and all the power is supplied to the electric motor by said storage means, or in the series hybrid mode, in which the heat engine (10) provides power to the electric motor (20) via said electric generator (15); the engagement of said clutch and the unlocking of said brake (14) causing the system to operate in the parallel hybrid mode, in which the electric generator charges (15) said storage means (50) and in which said heat engine (10) and said electric motor (20) in combination provide power to said transmission means (31).

2. Propulsion system according to claim 1, characterized in that the ratio of the epicyclic gearing (40) is chosen so as to allow the combination of the low torque supplied at a high number of revolutions by the heat engine (10) with the high torque supplied at a low number of revolutions by the electric motor (20).

3. Propulsion system according to claim 1 or 2, characterized in that the input shaft (11b) connected to the heat engine (10) is integral with a first sun wheel (41) of the epicyclic gearing (40), the input shaft (21) connected to the electric motor (20) is integral with a second sun wheel (42) of the epicyclic gearing (40) and the output shaft (30) is linked to the planet-wheel carrier (44) of said epicyclic gearing.

4. Propulsion system according to claims 1 or 2, characterized in that the input shaft (11b) connected to the heat engine (10) is integral with a first sun wheel (45) of said epicyclic gearing (40), the input shaft (21) connected to the electric motor (20) is integral with the planet-wheel carrier (47) of the epicyclic gearing (40), and the output shaft (30) is connected to a second sun wheel (49) of the epicyclic gearing (40).

5. Propulsion system according to one or more of the preceding claims, characterized in that a braking means (22) is provided on the shaft (21) which connects the electric motor (20) to the epicyclic gearing (40), locking of said braking means causing the heat engine (10) alone to deliver drive torque to the transmission means.

6. Propulsion system according to one or more of the preceding claims, characterized in that the electric motor (20) has associated with it an electronic regulator (25) which, depending on the commands received, the travel condition of the vehicle and the speed of rotation of the heat engine (10) and the generator (15), controls the electric motor (20) causing it to operate in either direction of rotation, at the desired torque and number of revolutions, or causing it to operate as a current generator.

7. Propulsion system according to one or more of the preceding claims, characterized in that the electric generator (15) is controlled by an elecronic regulator (18) performing the function of a rectifier, voltage regulator and electric power output controller.

8. Propulsion system according to claim 6, characterized in that the heat engine (10) is provided with a speed regulating device governed by the regulator (25) of the electric motor (20).

9. Propulsion system according to one or more of the preceding claims, characterized in that the heat engine (10) is controlled so as to function at a predetermined number of steady rotational speed conditions, at each rotational speed condition the heat engine rotating at a constant rotational speed, during the operation at any one of said predetermined number of rotational speed conditions of the heat engine, the advancing speed of the vehicle being controlled by varying the rotational speed of the electric motor (20), and when the heat engine switches from a lower rotational speed to a higher rotational speed, the speed of said electric motor (20) being temporarily reduced, or vice-versa.

**Patentansprüche**

1. Hybridantriebsystem für Fahrzeuge, mit

- einer Wärmekraftmaschine (10);
- einer Transmission (31) zum Übertragen der von dem System gelieferten Leistung auf die Räder des Fahrzeuges;
- einem elektrischen Generator (15), der ständig mit der Wärmekraftmaschine (10) verbunden und von ihr angetrieben ist, wobei der elektrische Generator (15) an eine Speichereinrichtung (50) zum Speichern der vom elektrischen Generator erzeugten elektrischen Energie angeschlossen ist;
- einem Elektromotor (20), der elektrisch mit der Speichereinrichtung (50) verbunden ist;
- einem Planetengetriebe (40) mit einer ersten und einer zweiten Antriebewelle (11b, 21) und einer Abtriebswelle (30), wobei die Wärmekraftmaschine (10) und der Elektromotor (20) mit der ersten bzw. zweiten Antriebswelle (11b, 21) verbunden sind; wobei die Wärmekraftmaschine (10) mit der ersten Antriebswelle (11b) des Planetengetriebes (40) über eine Kupplung (16) und eine zwischen der Kupplung und dem Planetengetriebe (40) angeordnete Bremse (14) verbunden ist, wobei das Auskuppeln der Kupplung und das Blockieren der Bremse (14) bewirkt, daß das System allein im elektrischen Modus arbeitet, in welchem die Wärmekraftmaschine außer Betrieb ist und die gesamte Leistung dem Elektromotor durch die Speichereinrichtung zugeführt wird, oder im Reihenhybridmodus, in welchem die Wärmekraftmaschine (10) Leistung an den Elektromotor (20) über den elektrischen Generator (15) liefert; und wobei das Einkuppeln der Kupplung und das Freigeben der Bremse (14) bewirkt, daß das System im Parallelhybridmodus arbeitet, in welchem der elektrische Generator (15) die Speichereinrichtung (50) auflädt und die Wärmekraftmaschine (10) und der Elektromotor (20) in Kombination Leistung an die Transmission (31) liefern.

2. Antriebssystem nach Anspruch 1, dadurch **gekennzeichnet,** daß das Verhältnis des Planetengetriebes (40) so gewählt ist, daß es eine Kombination des von der Wärmekraftmaschine (10) bei einer hohen Drehzahl gelieferten niedrigen Drehmoments mit dem von dem Elektromotor (20) bei niedriger Drehzahl gelieferten hohen Drehmoment ermöglicht.

3. Antriebssystem nach Anspruch 1 oder 2, dadurch **gekennzeichnet,** daß die mit der Wärmekraftmaschine (10) verbundene Antriebswelle (11b) drehfest mit einem ersten Sonnenrad (41) des Planetengetriebes (40) ist, daß die mit dem Elektromotor (20) verbundene Antriebswelle (21) drehfest mit einem zweiten Sonnenrad (42) des Planetengetriebes (40) ist, und daß die Abtriebswelle (30) mit dem Planetenradträger (40) des Planetengetriebes verbunden ist.

4. Antriebssystem nach Anspruch 1 oder 2, dadurch **gekennzeichnet,** daß die mit der Wärmekraftmaschine (10) verbundene Antriebswelle (11b) drehfest mit einem ersten Sonnenrad (45) des Planetengetriebes (40) ist, daß die mit dem Elektromotor (20) verbundene Antriebswelle (21) drehfest mit dem Planetenradträger (47) des Planetengetriebes (40) ist, und daß die Abtriebswelle (30) mit einem zweiten Sonnenrad (49) des Planetengetriebes (40) verbunden ist.

5. Antriebssystem nach einem oder mehreren der vorangehenden Ansprüche, dadurch **gekennzeichnet,** daß eine Bremseinrichtung an der den Elektromotor (20) mit dem Planetengetriebe (40) verbindenden Welle (21) vorgesehen ist, wobei ein Blockieren der Bremseinrichtung bewirkt, daß die Wärmekraftmaschine alleine das Antriebsdrehmoment an die Transmission liefert.

6. Antriebssystem nach einem oder mehreren der vorangehenden Ansprüche, dadurch **gekennzeichnet,** daß dem Elektromotor (20) ein elektronischer Regler (25) zugeordnet ist, der in Abhängigkeit von empfangenen Befehlen, vom Fahrzustand des Fahrzeuge und von der Drehzahl der Wärmekraftmaschine (10) und des Generators (15) den Elektromotor (20) so steuert, daß dieser in der einen oder anderen Drehrichtung bei dem gewünschten Drehmoment und der gewünschten Drehzahl arbeitet oder als ein Stromgenerator arbeitet.

7. Antriebssystem nach einem oder mehreren der vorangehenden Ansprüche, dadurch **gekennzeichnet,** daß der elektrische Generator (15) von einem elektronischen Regler (18) gesteuert ist, der die Funktion eines Gleichrichters, eines Spannungsreglers und einer Steuerung für die elektrische Ausgangsleistung hat.

8. Antriebssystem nach Anspruch 6, dadurch **gekennzeichnet,** daß die Wärmekraftmaschine (10) mit einer Drehzahlregeleinrichtung versehen ist, die von dem Regler (25) des Elektromotors (20) gesteuert wird.

9. Antriebssystem nach einem oder mehreren der vorangehenden Ansprüche, dadurch **gekennzeichnet,** daß die Wärmekraftmaschine (10) so gesteuert ist, daß sie in einer vorgegebenen Anzahl von drehzahlstabilen Zuständen arbeitet, wobei in jedem drehzahlstabilen Zustand die Wärmekraftmaschine mit konstanter Drehzahl läuft, wobei in jedem der vorgegenenen Anzahl von drehzahlstabilen Zuständen der Wärmekraftmaschine die Fahrgeschwindigkeit des Fahrzeugs durch Verändern der Drehzahl des Elektromotors (20) gesteuert wird, und wenn die Wärmekraftmaschine von einer niedrigen zu einer höheren Drehzahl umschaltet, die Drehzahl des Elektromotors (20) zeitweilig herabgesetzt wird, oder umgekehrt.

## Revendications

1. Système de propulsion hybride pour véhicules, comprenant :

   - un moteur thermique (10) ;
   - des moyens de transmission (31) pour transmettre la puissance envoyée par le système aux roues d'un véhicule ;
   - un générateur électrique (15) connecté en permanence audit moteur thermique (10) et entraîné par ce dernier, ledit générateur électrique (15) étant connecté à des moyens de stockage (50) pour stocker une énergie électrique produite par ledit générateur électrique ;
   - un moteur électrique (20) connecté audit moyen de stockage (50) ;
   - un engrenage planétaire (40) comportant des premier et second arbres d'entrée (11b, 21) et un arbre de sortie (30), ledit moteur thermique (10) et ledit moteur électrique (20) étant raccordés respectivement auxdits premier et second arbres d'entrée (11b, 21) ;
   dans lequel le moteur thermique (10) est raccordé audit premier arbre d'entrée (11b) dudit engrenage planétaire (40) au moyen d'un embrayage (16) et d'un frein (14) disposés entre l'embrayage et l'engrenage planétaire (40), le désenclenchement dudit embrayage et le blocage dudit frein (14) amenant ledit système à fonctionner dans le mode uniquement électrique, dans lequel le moteur thermique ne fonctionne pas et toute la puissance est envoyée au moteur électrique par lesdits moyens de stockage, ou dans le mode hybride en série, dans lequel le moteur thermique (10) envoie une puissance au moteur électrique (20) par l'intermédiaire dudit générateur électrique (50) ; l'enclenchement dudit embrayage et le déblocage dudit frein (14) amenant le système à fonctionner dans le mode hybride en parallèle, dans lequel ledit générateur électrique (15) charge lesdits moyens de stockage (50) et dans lequel ledit moteur thermique (10) et ledit moteur électrique (20) délivrent en combinaison une énergie audit moyen de transmission (31).

2. Système de propulsion selon la revendication 1, caractérisé en ce que le rapport de l'engrenage planétaire (40) est choisi de manière à permettre la combinaison du faible couple délivré pour une vitesse de rotation élevée par le moteur thermique (10) au couple élevé délivré pour une faible vitesse de rotation par le moteur électrique (20).

3. Système de propulsion selon la revendication 1 ou 2, caractérisé en ce que l'arbre d'entrée (11b) raccordé au moteur thermique (10) est solidaire d'une première roue planétaire (41) de l'engrenage planétaire (40), l'arbre d'entrée (21) raccordé au moteur électrique (20) est solidaire d'une seconde roue planétaire (42) de l'engrenage planétaire (40) et l'arbre de sortie (30) est articulé au porte-pignon satellite (44) dudit engrenage planétaire.

4. Système de propulsion selon la revendication 1 ou 2, caractérisé en ce que l'arbre d'entrée (11b) raccordé au moteur thermique (10) est solidaire d'une première roue planétaire (45) dudit engrenage planétaire (40), l'arbre d'entrée (21) raccordé au moteur électrique (20) est solidaire du porte-pignon satellite (47) de l'engrenage planétaire (40) et l'arbre de sortie (30) est raccordé à une seconde roue planétaire (49) de l'engrenage planétaire (40).

5. Système de propulsion selon une ou plusieurs des revendications précédentes, caractérisé en ce que des moyens de freinage (22) sont prévus sur l'arbre (21) qui raccorde le moteur électrique (20) à l'engrenage planétaire (40), le blocage desdits moyens de freinage amenant le moteur thermique (10) à délivrer seul le couple d'entraînement aux moyens de transmission.

6. Système de propulsion selon une ou plusieurs des revendications précédentes, caractérisé en ce qu'au moteur électrique (20) est associé un régulateur électronique (25) qui, en fonction des commandes reçues, de la condition de déplacement du véhicule et de la vitesse de rotation du moteur thermique (10) et du générateur (15), commande le moteur électrique (20) en l'amenant à tourner dans un sens de rotation au dans l'autre, avec le couple désiré et la vitesse de rotation désirée, ou l'amène à fonctionner en tant que générateur de courant.

7. Système de propulsion selon une ou plusieurs des revendications précédentes, caractérisé en ce que le générateur électrique (15) est commandé par un régulateur électronique (18) qui assume la fonction d'un redresseur, d'un régulateur de tension et d'un dispositif de commande de sortie de la puissance électrique.

8. Système de propulsion selon la revendication 6, caractérisé en ce que le moteur thermique (10) est pourvu d'un dispositif de régulation de vitesse, qui est commandé par le régulateur (25) du moteur électrique (20).

9. Système de propulsion selon une ou plusieurs des revendications précédentes, caractérisé en ce que le moteur thermique (10) est commandé de manière à fonctionner dans un nombre prédéterminé de conditions de vitesse de rotation stationnaire, le moteur thermique tournant à une vitesse de rotation constante dans chaque condition de vitesse de rotation, pendant le fonctionnement dans n'importe quelle condition faisant partie dudit nombre prédéterminé de conditions de vitesse de rotation du moteur thermique, la vitesse d'avance du véhicule étant commandée par modification de la vitesse de rotation du moteur électrique (20), et la vitesse dudit moteur électrique (20) étant réduite temporairement lorsque le moteur thermique est commuté d'une vitesse de rotation inférieure à une vitesse de rotation supérieure, ou vice-versa.

Fig.1

Fig.2

Fig.3